# EUROPEAN PATENT APPLICATION

(11) **EP 3 958 203 A1**
(43) Date of publication of application: **23.02.2022**
(21) Application number: 20934881.2
(22) Date of filing: 04.11.2020
(51) Int. Cl.: G06Q 40/04, G06Q 40/02, G06Q 30/06

(54) **METHOD, SYSTEM, AND NON-TRANSITORY COMPUTER-READABLE RECORDING MEDIUM FOR SUPPORTING ASSET TRANSACTION**

(30) Priority: 13.05.2020 KR 20200057383; 22.06.2020 KR 20200076070; 27.07.2020 KR 20200093394; 27.10.2020 KR 20200140643
(71) Applicant: TRU technologies Co., Ltd., Mapo-gu Seoul 04213 (KR)
(72) Inventor: HA, Jae Woo, Seoul 04387 (KR); MASSEY, James Frederick, 10317 Vilnius (LT); KEYS, Martin, Twickenham, Greater London TW11NG (GB)
(74) Representative: M. Zardi & Co S.A.
(86) International application number: PCT/KR2020/015347
(87) International publication number: WO 2021/230443

(57) **Abstract**

According to one aspect of the present invention, there is provided a method for assisting an asset transaction, the method comprising the steps of: providing offer information from at least one trader node to a first trader node; and confirming, on the basis of offer information for acceptance which is determined with reference to a first transaction condition of the first trader node among the offer information, a transaction between the first trader node and the second trader node that has provided the offer information for acceptance.

## Description

### CROSS-REFERENCE TO RELATED APPLICATION(S)

This application is a continuation application of Patent Cooperation Treaty (PCT) International Application No. PCT/KR2020/015347 filed on November 4, 2020, which claims priority to Korean Patent Application Nos. 10-2020-0057383, 10-2020-0076070, 10-2020-0093394, and 10-2020-0140643 filed on May 13, June 22, July 27, and October 27, 2020. The entire contents of PCT International Application No. PCT/KR2020/015347 and Korean Patent Application Nos. 10-2020-0057383, 10-2020-0076070, 10-2020-0093394, and 10-2020-0140643 are hereby incorporated by reference.

### FIELD OF THE INVENTION

The present invention relates to a method, system, and non-transitory computer-readable recording medium for assisting an asset transaction.

### BACKGROUND

A securities lending and borrowing transaction refers to a lending and borrowing transaction (LBT) contract for securities consumption that is established in a manner that a lender agrees to transfer ownership of his/her own securities to a borrower and the borrower agrees to return securities of the same item and quantity. When such a LBT is established, rights to dispose of and benefit from the securities are transferred to the borrower. As a benefit in return, the borrower compensates for economic benefits that could have been obtained if the lender had not made the LBT, such as dividends in the form of cash or stocks, bonus issues, and right issues.

The LBT is used to achieve various purposes. Specifically, the LBT is used for short-selling, arbitrage transaction based on short-selling, collateral, fail coverage, recall coverage for replacing a quantity whose return is requested in an existing LBT with a new quantity, refinancing for replacing a quantity of an existing LBT with a quantity with a lower commission, replacement of a quantity of an existing LBT with a more stable quantity, and the like.

Over the past several years, the number and amount of LBTs have increased dramatically. However, in confirming a LBT contract conducted on an over-the-counter market, there is no technique for assisting LBT participants to discover, negotiate, and confirm a larger number of transactions satisfying conditions with desired transaction partners in a fast and efficient manner (hereinafter referred to as "discovery and confirmation of transactions"), and for verifying validity of such transactions. Due to the absence of such a technique, the LBT participants rely on telephones, messengers, Bloomberg Terminals, and e-mail to negotiate the LBTs.

In order for a borrower to short-sell stocks, the borrower should own borrowed stocks before a short-selling order. In general, the borrower is acknowledged to own the borrowed stocks when the borrowing of the stocks is completed or a LBT contract for the stocks is confirmed. Accordingly, global investors generally place short-selling orders with offer prices as soon as the LBT contract is confirmed. However, with a conventional method, it takes a considerable amount of time for discovery or search of quantities for stock borrowing and lending, negotiation, contract confirmation, and verification.

In connection with the foregoing, there are specific problems as below. First, a lot of time and effort are taken in executing a LBT contract because LBT participants should individually communicate with each other through different communication means (e.g., chats, e-mail, and the like as mentioned above). Particularly, in the time-sensitive financial market, contracts for a large number of securities are required to be confirmed for a short period of time. In practice, since there is no technique for assisting discovery and confirmation of a large number of transactions, the transactions have been handled in a very inefficient and slow manner.

Second, information held by both LBT participants may differ. For example, in a case in which negotiation is made by phone or messenger, a serious error such as naked short-selling or settlement failure may be caused when there is a difference in the information confirmed by both the participants. This is because validity of negotiation conducted by both the participants is not properly verified. Presently, such validity verification is carried out according to arbitrary human interpretation.

Third, an error may occur in the process of entry. When participants enter confirmed details to their own systems in a manual manner, a mistake or fat-finger error may occur. Such a mistake or fat-finger error may cause serious problems such as naked short-selling and settlement delay. In fact, there was a case in which Goldman Sachs made naked short-selling in the Korean stock market due to an error in the process of entry, and consequently a significant penalty was imposed.

Fourth, techniques related to discovery and confirmation of transactions are implemented such that an exchange matches transactions of participants in a centralized structure (e.g., in the form of a bid-offer price or bulletin board). As such, a provider of such a platform (e.g., an exchange) occupies all information and the discovery and confirmation of transactions are performed according to an algorithm and method determined by the provider. The platform provider manages all information in such a centralized structure, so that the confidentiality of transaction information of transaction participants is not guaranteed and inevitably vulnerable to external attacks. Further, since the discovery and confirmation of transactions rely on a single service provider, the nature of the over-the-counter market in which participants can freely trade according to their desired conditions and methods is inevitably diluted. In addition, until a transaction is confirmed (or even after the transaction is confirmed in the case of a bid-offer price competition method), transaction counterparts are unknown in some cases.

Therefore, there is a need for a technique for allowing one or more traders (e.g., borrowers) to individually discover and confirm multiple transactions with one or more transaction counterparties (e.g., lenders), without centralized discovery and confirmation of transactions, and for verifying validity of the transactions to block invalid transactions in advance.

Further, there is also a need for the above-described technique with respect to all asset transactions conducted on an exchange or over-the-counter market, including financial transactions (e.g., total return swap, interest rate swap, etc.), non-financial transactions (e.g., internet advertising bidding, hotel or flight reservation, real estate, data, etc.), and other asset transactions (e.g., virtual currency, points, mileage, etc.), as well as securities lending and borrowing transactions conducted on an exchange or over-the-counter market.

### SUMMARY OF THE INVENTION

One object of the present invention is to solve all the above-described problems in the prior art.

Another object of the invention is to conduct discovery, negotiation, and confirmation of asset transactions efficiently and quickly on the basis of a distributed manner (e.g., peer-to-peer (P2P) between individuals, between individuals and institutions, or between institutions) rather than a centralized manner.

Yet another object of the invention is to assist a transaction participant to execute a transaction with a desired counterpart or a desired condition.

Still another object of the invention is to ensure confidentiality by segregating and storing information associated with each transaction for each participant of the transaction, rather than using a centralized database.

Still yet another object of the invention is to verify validity of an asset transaction on the basis of information on distributed bidirectional communication to prevent an error in the asset transaction or a mistaken transaction.

The representative configurations of the invention to achieve the above objects are described below.

According to one aspect of the invention, there is provided a method for assisting an asset transaction, the method comprising the steps of: providing offer information from at least one trader node to a first trader node; and confirming, on the basis of offer information for acceptance which is determined with reference to a first transaction condition of the first trader node among the offer information, a transaction between the first trader node and the second trader node that has provided the offer information for acceptance.

According to another aspect of the invention, there is provided a system for assisting an asset transaction, the system comprising: an offer information management unit configured to provide offer information from at least one trader node to a first trader node; and a transaction confirmation management unit configured to confirm, on the basis of offer information for acceptance which is determined with reference to a first transaction condition of the first trader node among the offer information, a transaction between the first trader node and the second trader node that has provided the offer information for acceptance.

In addition, there are further provided other methods and systems to implement the invention, as well as non-transitory computer-readable recording media having stored thereon computer programs for executing the methods.

According to the invention, it is possible to conduct discovery, negotiation, and confirmation of asset transactions efficiently and quickly on the basis of a distributed manner (e.g., peer-to-peer (P2P) between individuals, between individuals and institutions, or between institutions) rather than a centralized manner.

According to the invention, it is possible to assist a participant to execute a transaction with a desired counterpart or a desired condition.

According to the invention, it is possible to allow a participant to execute a transaction with a desired counterpart or a desired condition on the basis of bidirectional communication between individuals.

According to the invention, it is possible to ensure confidentiality by segregating and storing information associated with each transaction for each participant of the transaction, rather than using a centralized database.

According to the invention, it is possible to verify validity of an asset transaction on the basis of information on distributed bidirectional communication to prevent an error in the asset transaction or a mistaken transaction.

### BRIEF DESCRIPTION OF THE DRAWINGS

FIG. 1 schematically shows the configuration of an entire system for assisting an asset transaction according to one embodiment of the invention.
FIGS. 2 and 5 illustratively show how to assist an asset transaction according to one embodiment of the invention.
FIGS. 3, 4 and 6 to 8 illustratively show user interface screens for assisting an asset transaction according to one embodiment of the invention.

### DETAILED DESCRIPTION OF THE INVENTION

In the following detailed description of the present invention, references are made to the accompanying drawings that show, by way of illustration, specific embodiments in which the invention may be practiced. These embodiments are described in sufficient detail to enable those skilled in the art to practice the invention. It is to be understood that the various embodiments of the invention, although different from each other, are not necessarily mutually exclusive. For example, specific shapes, structures and characteristics described herein may be implemented as modified from one embodiment to another without departing from the spirit and scope of the invention. Furthermore, it shall be understood that the locations or arrangements of individual elements within each embodiment may also be modified without departing from the spirit and scope of the invention. Therefore, the following detailed description is not to be taken in a limiting sense, and the scope of the invention is to be taken as encompassing the scope of the appended claims and all equivalents thereof. In the drawings, like reference numerals refer to the same or similar elements throughout the several views.

The term "asset" herein should be understood as the broadest concept encompassing all objects with economic values, such as financial assets (e.g., securities), non-financial assets (e.g., real estates), and other assets (e.g., virtual currency, points, and mileage).

Further, the term "security" herein refers to a certificate representing the right to claim for valuables like a certain amount of money or cargo in a dictionary definition, i.e., a certificate representing property rights under commercial law. However, the securities herein are not necessarily limited to securities stipulated by commercial law or security exchange law, but should be understood as the broadest concept encompassing all types of possible objects of securities lending and borrowing transaction. For example, the securities herein may include: financial products such as listed stocks, unlisted stocks, bonds, beneficiary securities, preemptive rights, financial instruments including beneficiary securities, derivative products including futures and equity swap, ELS (Equity-Linked Securities), ELW (Equity-Linked Warrant), BW (Bond with Warrant), CB (Convertible Bond), and ETF (Exchange Traded Funds).

Hereinafter, various preferred embodiments of the present invention will be described in detail with reference to the accompanying drawings to enable those skilled in the art to easily implement the invention.

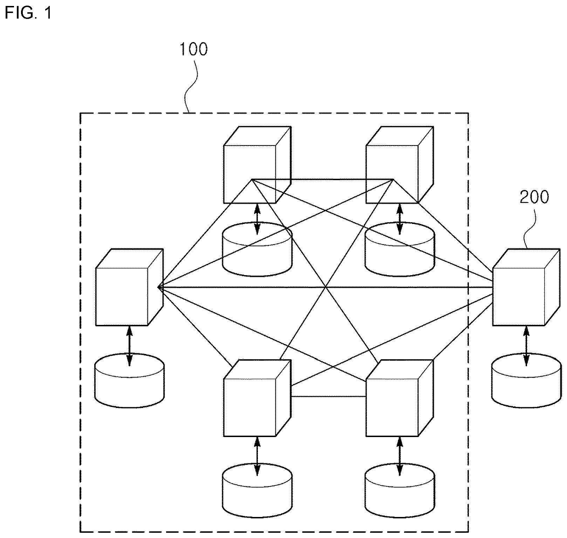

FIG. 1 schematically shows the configuration of the entire system for assisting an asset transaction according to one embodiment of the invention.

As shown in FIG. 1, the entire system according to one embodiment of the invention may comprise a communication network, a plurality of nodes 100, and an asset transaction system 200.

First, the communication network according to one embodiment of the invention may be configured regardless of communication modality such as wired and wireless communications, and may be constructed from a variety of communication networks such as local area networks (LANs), metropolitan area networks (MANs), and wide area networks (WANs). Preferably, the communication network described herein may be the Internet or the World Wide Web (WWW) However, the communication network is not necessarily limited thereto, and may at least partially include known wired/wireless data communication networks, known telephone networks, or known wired/wireless television communication networks.

For example, the communication network may be a wireless data communication network, at least a part of which may be implemented with a conventional communication scheme such as WiFi communication, WiFi-Direct communication, Long Term Evolution (LTE) communication, Bluetooth communication (e.g., Bluetooth Low Energy (BLE) communication), infrared communication, and ultrasonic communication.

Next, the plurality of nodes 100 according to one embodiment of the invention are points of contact or connection that may communicate with each other via the communication network, and may encompass physical nodes based on a server, a computer, a laptop, a smart phone, a tablet PC, and the like (i.e., digital equipment having a memory means and a microprocessor for computing capabilities) or logical nodes based on an application, a program module, a virtual machine, and the like (i.e., virtual nodes).

Meanwhile, the plurality of nodes 100 according to one embodiment of the invention may include a transaction assistance system for assisting an asset transaction according to the invention, in the form of a program module such as an application or a widget. Further, the program module may be downloaded from an external application distribution server (not shown), an external system (not shown), or the like. The transaction assistance system may be operated on the basis of distributed ledger technology (DLT), as necessary. The term "distributed ledger technology" herein may refer to a manner in which information associated with an asset transaction between nodes of two parties is encrypted or made non-invertible, and is distributively recorded to and managed by the two parties (or other parties). The distributed ledger may encompass a private blockchain in which information determined according to a consensus between the two parties is managed in the form of a blockchain at the nodes of the two parties. Further, a known technique related to non-invertible transformation or non-repudiation, such as a hash function (e.g., a message-digest algorithm 5 (MD5)), a hash operation, and a cryptography algorithm, may be employed in the encryption or non-invertible transformation.

Further, according to one embodiment of the invention, the plurality of nodes 100 may include various participant types of nodes associated with asset transactions according to purposes, rights, and the like. For example, the plurality of nodes 100 may include a first trader node 110 for initiating an asset transaction and accepting offer information, and a second trader node 120 for providing offer information and providing acceptance confirmation information corresponding to acceptance information. Meanwhile, the plurality of nodes 100 may further include a transaction verification node, a regulator node, an intermediary node, a broker node, a depository institution node, an asset manager node, and the like, as necessary.

The transaction assistance system according to one embodiment of the invention may function to provide offer information from at least one trader node to the first trader node 110 and confirm, on the basis of offer information for acceptance which is determined with reference to a first transaction condition of the first trader node 110 among the offer information, a transaction between the first trader node 110 and the second trader node 120 that has provided the offer information for acceptance.

The configurations and functions of the transaction assistance system according to the invention will be discussed in more detail below. Meanwhile, although the transaction assistance system has been described as above, the above description is illustrative and it will be apparent to those skilled in the art that at least a part of the functions or components required for the transaction assistance system may be implemented or included in the plurality of nodes 100 (e.g., a first trader node 110, a second trader node 120, and a third trader node 130) or an external system (not shown), as necessary. For example, a user according to one embodiment of the invention may perform an asset transaction (e.g., lending, borrowing, etc.) according to the invention by using an application including at least a part of the functions of the transaction assistance system according to the invention on his/her node, or connecting to a website providing at least at least a part of the functions of the transaction assistance system according to the invention using his/her node.

Next, when receiving information on asset transactions between a plurality of trader nodes, the asset transaction system 200 according to one embodiment of the invention may function to execute transactions such as transfer, lending, borrowing, buying, and selling of assets corresponding to the information on the asset transactions. For example, when the assets are securities, the asset transaction system 200 according to one embodiment of the invention may be partially similar to a system operated by a stock exchange (e.g., the New York Stock Exchange, the Tokyo Stock Exchange, or the Korea Stock Exchange), the Korea Securities Depository, the Depository Trust & Clearing Corporation (DTCC), or the like.

### Configuration of the Transaction Assistance System

Hereinafter, the functions of the respective components of the transaction assistance system crucial for implementing the invention will be discussed.

The transaction assistance system may comprise an offer information management unit, a transaction confirmation management unit, and a validity management unit. According to one embodiment of the invention, at least some of the offer information management unit, the transaction confirmation management unit, and the validity management unit may be program modules to communicate with an external system. The program modules may be included in the transaction assistance system in the form of operating systems, application program modules, and other program modules, while they may be physically stored in a variety of commonly known storage devices. Further, the program modules may also be stored in a remote storage device that may communicate with the transaction assistance system. Meanwhile, such program modules may include, but not limited to, routines, subroutines, programs, objects, components, data structures, and the like for performing specific tasks or executing specific abstract data types as will be described below in accordance with the invention.

First, the offer information management unit according to one embodiment of the invention may function to provide offer information from at least one trader node to the first trader node 110. According to one embodiment of the invention, the at least one trader node may be a node present in a network associated with the first trader node 110 (e.g., a network that is specified by the first trader node, or dynamically configured with reference to information of the user of the first trader node) or an open network without restrictions.

For example, when an asset transaction initiation based on a first transaction condition is requested from the first trader node 110, the offer information management unit may provide offer information associated with the first transaction condition from at least one trader node to the first trader node 110. The transaction condition according to one embodiment of the invention may include a condition related to an object of the transaction, such as a type, quantity, and amount of an asset, a commission rate (e.g., a commission rate for lending or borrowing), a date, a type and amount of collateral necessary for the transaction, a dividend, corporate action liability, and recall possibility, and a condition related to a transaction manner, such as a first-come-first-served basis, a total score basis, a highest profit basis, a first taker basis (e.g., a person who first confirms an offered quantity secures the quantity), and a bidding basis (e.g., when the first trader node 110 is a lender node, the trader node 120 having offered the highest commission rate for a certain period among borrower nodes secures the quantity).

More specifically, when an asset transaction initiation based on a first transaction condition determined by the first trader node 110 is requested, the offer information management unit may provide information on the asset transaction initiation to at least one trader node. In this case, the transaction may be a one-to-many transaction when the information on the asset transaction initiation is provided to a plurality of trader nodes present in a network specified by the first trader node 110 (or an open network without restrictions), and may be a one-to-one transaction when the information on the asset transaction initiation is provided to one trader node present in the network specified by the first trader node 110. Then, when offer information associated with the first transaction condition is determined from the at least one trader node, the offer information may be provided from the at least one trader node to the first trader node 110. For example, the offer information management unit may determine the offer information associated with the first transaction condition with reference to an asset to lend or borrow specified in the first transaction condition, and a lendable or borrowable asset of the at least one trader node. That is, the offer information management unit may compare a lendable asset of the at least one trader node with a quantity to borrow specified in the first transaction condition to determine the offer information on the basis of the smaller of a predetermined quantity of the lendable asset (e.g., 10% of the lendable asset) and the quantity to borrow specified in the first transaction condition. Further, the offer information management unit may determine the offer information associated with the first transaction condition with reference to a condition related to at least one of a preference level, commission rate, quantity, date, asset type, amount, type and amount of collateral necessary for the transaction, recall possibility, and rights relationship determined by the at least one trader node. More specifically, when a commission rate specified in the first transaction condition is higher than a commission rate determined by the at least one trader node, the offer information management unit may determine the offer information on the basis of the determined commission rate or the commission rate specified in the first transaction condition.

Further, the offer information management unit may selectively provide the offer information to a trader node matched with a second transaction condition of the at least one trader node.

For example, when requests for a plurality of asset transaction initiations are made from a plurality of trader nodes, the offer information management unit may selectively provide the offer information to trader nodes associated with the asset transaction initiations that satisfy a specific transaction condition (i.e., the second transaction condition determined by the at least one trader node) among the plurality of asset transaction initiations. That is, the offer information may be selectively provided to only trader nodes that satisfy the determined condition, without providing the offer information to all trader nodes.

Further, the offer information management unit may automatically provide the offer information when a trader node matched with the second transaction condition of the at least one trader node is specified.

For example, when trader nodes associated with the asset transaction initiations that satisfy a specific transaction condition (i.e., the second transaction condition determined by the at least one trader node) among the plurality of asset transaction initiations requested from the plurality of trader nodes are specified, the offer information management unit may automatically provide the offer information to the specified trader nodes. That is, the offer information may be automatically provided when there are trader nodes that satisfy the determined condition.

Further, the offer information management unit may provide the offer information from the at least one trader node with reference to at least one of a priority, a weight, and a transaction condition preference level (or preference criterion or value) assigned to each trader node. According to one embodiment of the invention, the priority, weight, and transaction condition preference level may be predetermined by each of the plurality of trader nodes, or may be dynamically determined (e.g., may be updated every predetermined period by analyzing a transaction tendency of each trader node).

For example, the offer information management unit may first provide the offer information to a trader node having the highest assigned priority, and when transaction confirmation has not been made for the offer information or a predetermined period has passed after the offer information is provided, the offer information management unit may provide the offer information to a trader node having the second highest priority.

As another example, the offer information management unit may calculate scores for transaction conditions provided from the plurality of trader nodes (e.g., the scores may be in the form of Boolean or numerical values) with reference to weights determined by the at least one trader node (e.g., the weights may be respectively determined with respect to a type, quantity, amount, and commission rate of an asset), and may provide the offer information to a trader node that provides a transaction condition having a score equal to or higher than a predetermined level (or the highest score).

Further, the offer information management unit may provide the offer information with reference to an order in which transaction initiation information based on the first transaction condition is provided from the first trader node to the at least one trader node.

For example, the offer information management unit may provide the offer information to the first trader node that provides the transaction initiation information fastest, with reference to the order in which the transaction initiation information is provided from the first trader node to the at least one trader node.

Further, the offer information management unit may provide the offer information to the first trader node 110 that has provided transaction initiation information profitable at or above a predetermined level (or most profitable), among the transaction initiation information requested (or provided) from the first trader node 110 on the basis of the first transaction condition.

For example, when a highest profit transaction method (e.g., a bidding method) is used, the offer information management unit may provide the offer information to the first trader node 110 that has provided the most profitable (or profit-maximizing) transaction initiation information (e.g., through competitive bidding), among the transaction initiation information requested from the first trader node 110.

Further, the offer information management unit may provide the offer information with reference to preference information (e.g., a transaction condition preference level or criterion) (or non-preference information) determined by the at least one trader node.

For example, the offer information management unit may provide the offer information to a trader node that satisfies preference information such as a minimum commission rate and a maximum quantity determined by the at least one trader node. Meanwhile, the offer information management unit may automatically provide the offer information when there is a trader node that satisfies the preference information, and may not provide the offer information when there is no trader node that satisfies the preference information. Further, the offer information management unit may determine a criterion or condition (e.g., a specific security item) for automatically providing (or not providing) the offer information.

Next, the transaction confirmation management unit according to one embodiment of the invention may function to determine offer information for acceptance with reference to a first transaction condition among the offer information provided to the first trader node 110.

For example, the transaction confirmation management unit may determine the offer information for acceptance with reference to an order in which the offer information is provided from the at least one trader node to the first trader node. More specifically, when the first transaction condition is determined as a first-come-first-served transaction method, the transaction confirmation management unit may determine the offer information that is first provided to the first trader node 110, among the offer information provided to the first trader node 110, as the offer information for acceptance.

As another example, the transaction confirmation management unit may determine the offer information that is profitable at or above a predetermined level (or maximizes profits) (e.g., the highest commission rate from the standpoint of a lender or the lowest commission rate from the standpoint of a borrower) among the offer information provided to the first trader node 110, as the offer information for acceptance. More specifically, the transaction confirmation management unit may determine the offer information that is most profitable (i.e., maximizes profits) to the first trader node 110, among the offer information provided to the first trader node 110, as the offer information for acceptance. Further, when the first transaction condition is determined as a highest profit transaction method, the transaction confirmation management unit may calculate a score for the offer information provided from the at least one trader node (e.g., the score may be in the form of a Boolean or numerical value) with reference to weights determined by the first trader node 110 (e.g., the weights may be respectively determined with respect to a type, quantity, amount, and commission rate of an asset specified in the offer information), and may determine the offer information having a score equal to or higher than a predetermined level (or the highest score) as the offer information for acceptance.

As another example, the transaction confirmation management unit may determine the offer information for acceptance with reference to priorities assigned to the plurality of trader nodes (or traders). More specifically, when the first transaction condition is a priority trader transaction method, the transaction confirmation management unit may determine the offer information of a trader node having a higher priority as the offer information for acceptance.

As another example, the transaction confirmation management unit may determine the offer information for acceptance by comparing and analyzing an asset to lend or borrow related to at least one of a type, quantity, amount, and commission rate of an asset specified by the first transaction condition of the first trader node 110, and a lendable or borrowable asset related to at least one of a quantity, amount, and commission rate of an asset of the offer information. More specifically, when the first transaction condition is a specific quantity transaction, the transaction confirmation management unit may determine, as the offer information for acceptance, the offer information corresponding to a quantity equal to or smaller at a certain ratio than the quantity specified by the first transaction condition. Further, when the first transaction condition is a specific commission rate criterion, the transaction confirmation management unit may determine, as the offer information for acceptance, the offer information corresponding to a commission rate less than the commission rate specified by the first transaction condition.

As another example, the transaction confirmation management unit may determine the offer information for acceptance with reference to a condition related to at least one of a type of collateral, recall possibility, and rights relationship determined by the first transaction condition of the first trader node 110. More specifically, the transaction confirmation management unit may determine, with reference to a type of collateral determined by the first transaction condition of the first trader node 110 (e.g., whether the collateral is cash or non-cash, or a type of currency when the collateral is cash), the offer information corresponding to the determined type of collateral as the offer information for acceptance.

As another example, the transaction confirmation management unit may determine the offer information for acceptance with reference to preference information (e.g., a transaction condition preference level or criterion) (or non-preference information) determined by the first trader node 110. More specifically, the transaction confirmation management unit may determine, as the offer information for acceptance, the offer information corresponding to preference information such as a maximum commission rate or a minimum quantity determined by the first trader node 110.

Further, the transaction confirmation management unit may function to confirm a transaction between the first trader node 110 and the second trader node 120 that has provided the offer information for acceptance, on the basis of the offer information for acceptance.

For example, when the offer information for acceptance is determined, the transaction confirmation management unit may confirm the transaction between the first trader node 110 and the second trader node 120 by providing acceptance information to the second trader node 120 that has provided the offer information for acceptance, and providing acceptance confirmation information corresponding to the acceptance information from the second trader node 120 to the first trader node 110.

More specifically, when the acceptance information and the acceptance confirmation information are exchanged between the first trader node 110 and the second trader node 120 (i.e., the trader node that has provided the offer information for acceptance to the first trader node 110), the transaction confirmation management unit may execute a transaction contract between the first trader node 110 and the second trader node 120 using blockchain-based smart contract technology.

Meanwhile, the transaction confirmation management unit may confirm the transaction with reference to at least one of the acceptance information provided to the second trader node 120 and a transaction condition of the second trader node 120.

For example, the transaction confirmation management unit may confirm the transaction with reference to an order in which the acceptance information is provided to the second trader node 120 (e.g., on a first-come-first-served basis). More specifically, the transaction confirmation management unit may confirm a transaction between the second trader node 120 and a trader node that has first provided the acceptance information to the second trader node 120 among a plurality of trader nodes that have provided the acceptance information to the second trader node 120.

As another example, the transaction confirmation management unit may confirm a transaction between the second trader node 120 and a trader node having provided the acceptance information that is profitable at or above a predetermined level (or most profitable) to the second trader node 120 (e.g., the highest commission rate from the standpoint of a lender or the lowest commission rate from the standpoint of a borrower) among the acceptance information provided to the second trader node 120. More specifically, the transaction confirmation management unit may confirm a transaction between the second trader node 120 and a trader node having provided the acceptance information that is most profitable (i.e., maximizes profits) to the second trader node 120 (e.g., a maximum commission rate or a maximum quantity) among the acceptance information provided to the second trader node 120.

As another example, the transaction confirmation management unit may confirm a transaction on the basis of priorities assigned to the plurality of trader nodes (or traders). More specifically, when the transaction condition of the second trader node 120 is a priority trader transaction method, the transaction confirmation management unit may confirm a transaction between the second trader node 120 and a trader node having a higher priority among the trader nodes that have provided the acceptance information.

As another example, the transaction confirmation management unit may determine a trader node for which a transaction is to be confirmed among the trader nodes that have provided the acceptance information, by comparing and analyzing an asset to lend or borrow related to at least one of a type, quantity, amount, and commission rate of an asset specified by the transaction condition of the second trader node 120, and a lendable or borrowable asset related to at least one of a quantity, amount, and commission rate of an asset in the acceptance information, and may confirm the transaction between the determined trader node and the second trader node 120.

As another example, the transaction confirmation management unit may confirm a transaction with reference to a condition related to at least one of a type of collateral, recall possibility, and rights relationship determined by the transaction condition of the second trader node 120. More specifically, the transaction confirmation management unit may confirm, with reference to a type of collateral determined by the transaction condition of the second trader node 120 (e.g., whether the collateral is cash or non-cash, or a type of currency when the collateral is cash), a transaction between the second trader node 120 and a trader node that has provided the acceptance information corresponding to the determined type of collateral.

As another example, the transaction confirmation management unit may confirm a transaction with reference to preference information (e.g., a transaction condition preference level or criterion) (or non-preference information) determined by the second trader node 120. More specifically, the transaction confirmation management unit may confirm a transaction between the second trader node 120 and a trader node that has provided the acceptance information corresponding to preference information such as a maximum commission rate or a minimum quantity determined by the second trader node 120.

Meanwhile, the transaction confirmation management unit may determine whether to confirm a transaction with reference to at least one of a time at which the offer information is provided from the at least one trader node, a time at which the offer information for acceptance is determined, a time at which the acceptance information is provided to the second trader node 120, and a time at which the acceptance confirmation information is provided to the first trader node 110.

For example, with respect to at least one of a time at which the offer information is provided from the at least one trader node, a time at which the offer information for acceptance is determined, a time at which the acceptance information is provided to the second trader node 120, and a time at which the acceptance confirmation information is provided to the first trader node 110, the transaction confirmation management unit may determine that a transaction is confirmed only when time has elapsed at or below a predetermined level, and determine that a transaction is not confirmed when time has elapsed above the predetermined level.

Meanwhile, when there are multiple pieces of offer information, offer information for acceptance, or acceptance information having the same condition, at least one of the multiple pieces of offer information, offer information for acceptance, or acceptance information within a predetermined reference time may be determined according to a preference level of a trader node. For example, the predetermined reference time may be specified on the basis of at least one of a time at which the offer information is provided from the at least one trader node, a time at which the offer information for acceptance is determined, a time at which the acceptance information is provided to the second trader node 120, and a time at which the acceptance confirmation information is provided to the first trader node 110.

Meanwhile, the transaction confirmation management unit may hold an asset associated with the offer information for acceptance of the second trader node 120 that has provided the offer information for acceptance.

For example, the transaction confirmation management unit may freeze an asset associated with the offer information for acceptance of the second trader node 120 (i.e., the trader node that has provided the offer information for acceptance to the first trader node 110) according to a request of the first trader node 110, in order to prevent a transaction of the asset with another trader node for a predetermined period of time.

Further, the transaction confirmation management unit may request a fill or kill (FOK) condition for a previously held asset of the second trader node 120 to a third trader node 130 associated with the previously held asset.

For example, when an asset of the second trader node 120 is previously held by the third trader node 130, the transaction confirmation management unit may request a FOK condition for the previously held asset to the third trader node 130 in order to urge the third trader node 130 to confirm a transaction. That is, the transaction confirmation management unit may request the third trader node 130 to confirm the transaction since the holding may be canceled when a full quantity or predetermined quantity of the previously held asset of the second trader node 120 is not traded within a predetermined period.

Next, the validity management unit according to one embodiment of the invention may function to verify validity of the transaction between the first trader node 110 and the second trader node 120 with reference to information on communication between the first trader node 110 and the second trader node 120. The communication information according to one embodiment of the invention may encompass information on at least one transmission/reception (e.g., the transaction initiation, the offer information, the acceptance information, and the acceptance confirmation information) between the first trader node 110 and the second trader node 120 from transaction commencement to transaction confirmation (or actual transaction execution).

For example, the validity management unit may verify, from the information on communication between the first trader node 110 and the second trader node 120, whether a quantity specified in information on the transaction initiation requested from the first trader node 110 is equal to or greater than a quantity specified in the offer information of the second tracer node 120, whether a quantity specified in the offer information for acceptance is equal to or greater than a quantity specified in the acceptance information, and whether a quantity specified in the acceptance information is equal to or greater than a quantity specified in the acceptance confirmation information, and may verify the validity of the transaction confirmed between the first trader node 110 and the second tracer node 120 with reference to a result of the above verification.

As another example, the validity management unit may verify, from the information on communication between the first trader node 110 and the second trader node 120, whether an asset type specified in information on the transaction initiation requested from the first trader node 110 is equal to an asset type specified in the offer information of the second trader node 120, whether an asset type specified in the offer information for acceptance is equal to an asset type specified in the acceptance information, and whether an asset type specified in the acceptance information is equal to an asset type specified in the acceptance confirmation information, and may verify the validity of the transaction confirmed between the first trader node 110 and the second trader node 120 with reference to a result of the above verification.

As another example, the validity management unit may verify, from the information on communication between the first trader node 110 and the second trader node 120, whether information is properly transferred to each of the first trader node 110 and the second trader node 120 without data corruption, whether information before encryption and information after decryption are identical when information associated with the transaction is encrypted, and whether information on the confirmed transaction is properly transferred to the first trader node 110 and the second trader node 120, and may verify the validity of the transaction confirmed between the first trader node 110 and the second trader node 120 with reference to a result of the above verification.

As another example, with respect to information on the transaction confirmed between the first trader node 110 and the second trader node 120, the validity management unit may verify whether a type, quantity, and amount of an asset traded between the first trader node 110 and the second trader node 120 are identically included, whether a time (e.g., a time stamp) associated with the transaction between the first trader node 110 and the second trader node 120 is properly included, whether identification information on the first trader node 110 and the second trader node 120 (e.g., information by which one trader node is distinguished from other trader nodes, such as biographical information, an IP address, and a unique identifier (UID)) is properly included, whether price information on an individual asset is correctly reflected and information on a total amount of the confirmed transaction is correctly recorded without errors, and whether a breakdown of the confirmed transaction is correctly recorded in data to be provided to an intermediary or custodian in charge of executing the transaction, and may verify the validity of the transaction confirmed between the first trader node 110 and the second trader node 120 with reference to a result of the above verification.

Meanwhile, when it is determined that there is a problem in the validity of the confirmed transaction, the validity management unit may provide information on the problem to the associated trader nodes.

For example, the validity management unit may provide the respective trader nodes (e.g., the first trader node 110 and the second trader node 120) with a warning message including a type, format, and content of the problem occurring in the validity of the confirmed transaction (e.g., through a message on a user interface (Ul) or an application programming interface (API)).

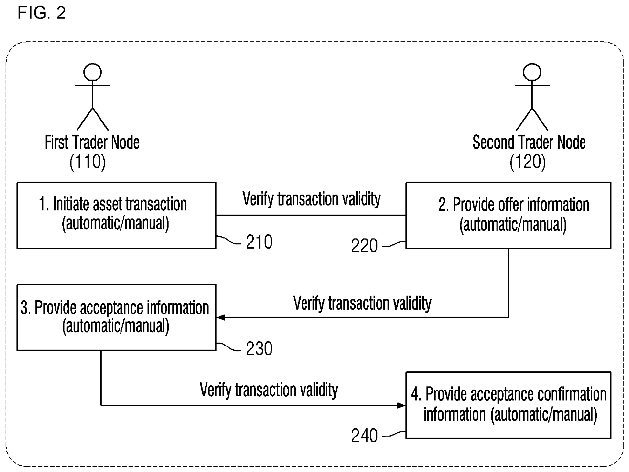

FIG. 2 illustratively shows how to assist an asset transaction according to one embodiment of the invention.

Referring to FIG. 2, it may be assumed that a securities lending and borrowing transaction is assisted between the first trader node 110 and the second trader node 120 according to one embodiment of the invention. Here, the first trader node 110 may be a borrower of securities, and the second trader node 120 may be a lender of the securities.

First, according to one embodiment of the invention, an asset transaction initiation based on a first transaction condition may be requested from the first trader node 110 (210).

For example, the first transaction condition may be directly entered by the first trader node 110, or may be provided as information in the form of a text file, an XML (eXtensible Markup Language) file, or the like via a variety of programming interfaces and protocols such as API (Application Programming Interface), FTP (File Transfer Protocol), and FIX (Financial Information eXchange).

Next, according to one embodiment of the invention, offer information associated with the first transaction condition may be provided from at least one trader node to the first trader node 110 (220).

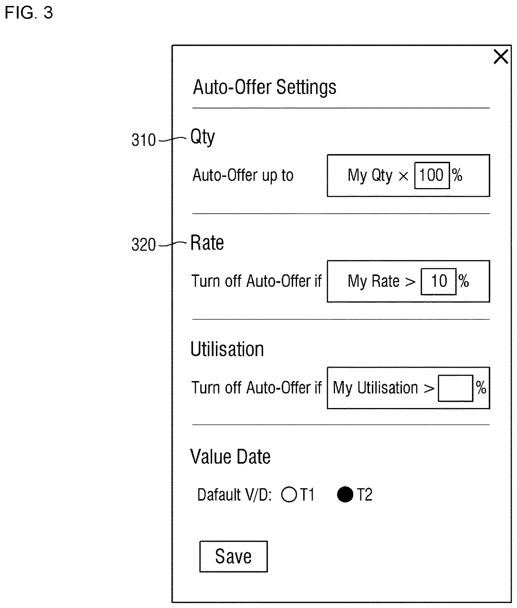

For example, referring to FIG. 3, the at least one trader node may be provided with an automatic offer user interface screen for assisting quick determination or provision of the offer information in correspondence to the first transaction condition. More specifically, when conditions such as a quantity 310 and a commission rate 320 determined by the at least one trader node are compared with the first transaction condition and a predetermined criterion is satisfied, the offer information specified on the basis of a predetermined quantity or commission rate may be automatically provided to the first trader node 110.

Next, according to one embodiment of the invention, offer information for acceptance may be determined among the offer information provided from the at least one trader node, with reference to the first transaction condition (e.g., by comparing the quantity and commission rate specified from the offer information with the quantity and commission rate specified from the first transaction condition).

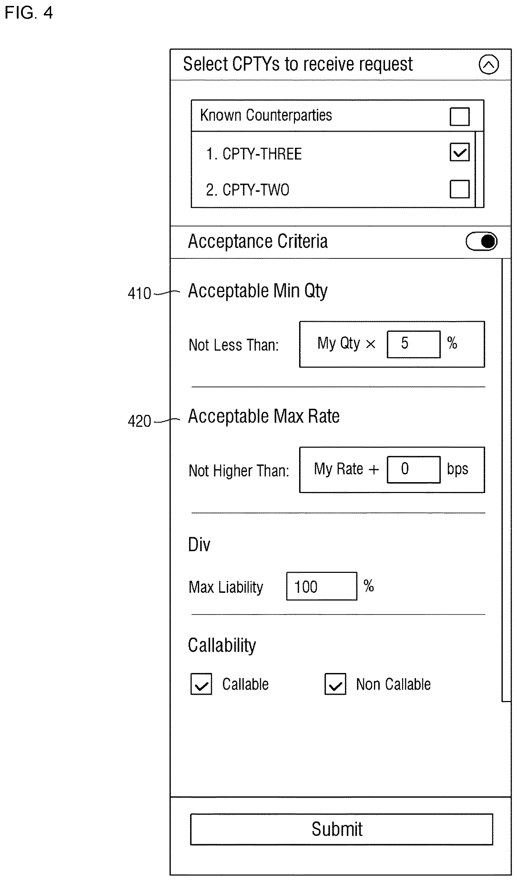

For example, referring to FIG. 4, an automatic acceptance user interface screen may be provided to assist quick acceptance of offer information for acceptance among the offer information. More specifically, the offer information that satisfies conditions such as a quantity 410 and a commission rate 420 determined by the first trader node 110 may be automatically determined as the offer information for acceptance.

Next, according to one embodiment of the invention, acceptance information may be provided from the first trader node 110 to the second trader node 120 that has provided the offer information for acceptance (230).

Next, according to one embodiment of the invention, acceptance confirmation information may be provided from the second trader node 120 to the first trader node 110 (240).

Next, a transaction between the first trader node 110 and the second trader node 120 may be confirmed on the basis of the offer information for acceptance. For example, according to one embodiment of the invention, the transaction between the first trader node 110 and the second trader node 120 may be confirmed on the basis of a smart contract supported in a distributed ledger network.

Next, validity of the confirmed transaction may be verified with reference to information on communication between the first trader node 110 and the second trader node 120.

Meanwhile, it is noted that the verification of the validity according to one embodiment of the invention is not necessarily limited to being performed in the last step, but may be performed in at least one of the steps of initiating the asset transaction, providing the offer information, providing the acceptance information, providing the acceptance confirmation information, and confirming the transaction.

Next, breakdown information of the transaction (e.g., a transaction statement) may be provided to the first trader node 110 and the second trader node 120.

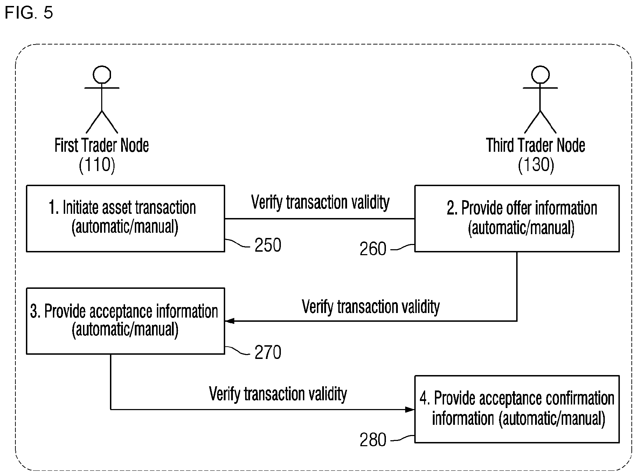

FIG. 5 illustratively shows how to assist an asset transaction with the first trader node 110 according to one embodiment of the invention.

Referring to FIGS. 2 and 5, it may be assumed that after the securities lending and borrowing transaction is assisted between the first trader node 110 and the second trader node 120 according to one embodiment of the invention, a securities lending and borrowing transaction is additionally assisted between the first trader node 110 and the third trader node 130 with respect to a quantity that is insufficient for the first trader node 110. Here, the first trader node 110 may be a borrower of securities, and the second trader node 120 and the third trader node 130 may be lenders of the securities.

First, according to one embodiment of the invention, an asset transaction initiation based on a third transaction condition may be requested from the first trader node 110 (250). The third transaction condition may be determined on the basis of a difference between a quantity specified by the offer information for acceptance of the second trader node 120 and a quantity specified by the first transaction condition.

Next, according to one embodiment of the invention, offer information associated with the third transaction condition may be provided from at least one trader node to the first trader node 110 (260).

Next, according to one embodiment of the invention, offer information for acceptance may be determined among the offer information provided from the at least one trader node, with reference to the third transaction condition.

Next, according to one embodiment of the invention, acceptance information may be provided to the third trader node 130 that has provided the offer information for acceptance (270).

Next, according to one embodiment of the invention, acceptance confirmation information may be provided from the third trader node 130 to the first trader node 110 (280).

Next, a transaction between the first trader node 110 and the third trader node 130 may be confirmed on the basis of the offer information for acceptance.

Meanwhile, validity verification may be performed with reference to information on communication between the first trader node 110 and the third trader node 130 in each of the steps of initiating the transaction, providing the offer information, providing the acceptance information, providing the acceptance confirmation information, and confirming the transaction.

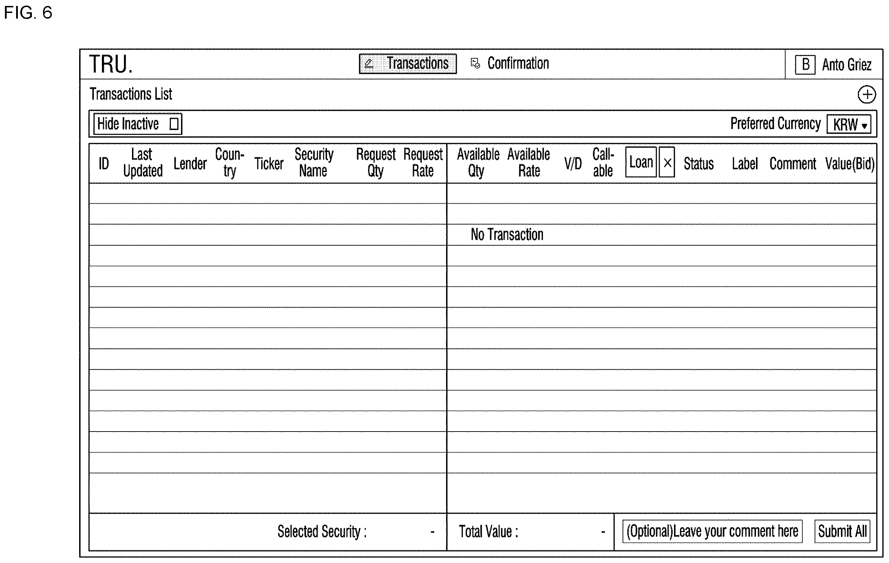

FIGS. 6 to 8 illustratively show user interface screens provided to the first trader node 110 and the second trader node 120 (or the third trader node 130).

Referring to FIG. 6, an asset transaction initiation, offer information, a breakdown of offer information acceptance, or a breakdown of acceptance confirmation information provision may be provided on a user interface screen of the first trader node 110 in real time or at a predetermined time interval.

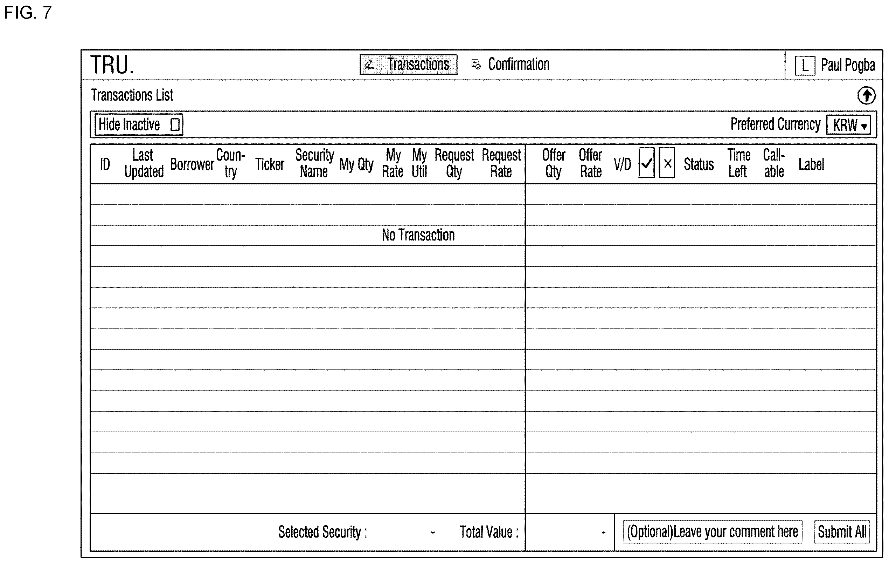

Referring to FIG. 7, an asset transaction initiation, offer information, a breakdown of offer information acceptance, or a breakdown of acceptance confirmation information provision may be provided on a user interface screen of the second trader node 120 in real time or at a predetermined time interval.

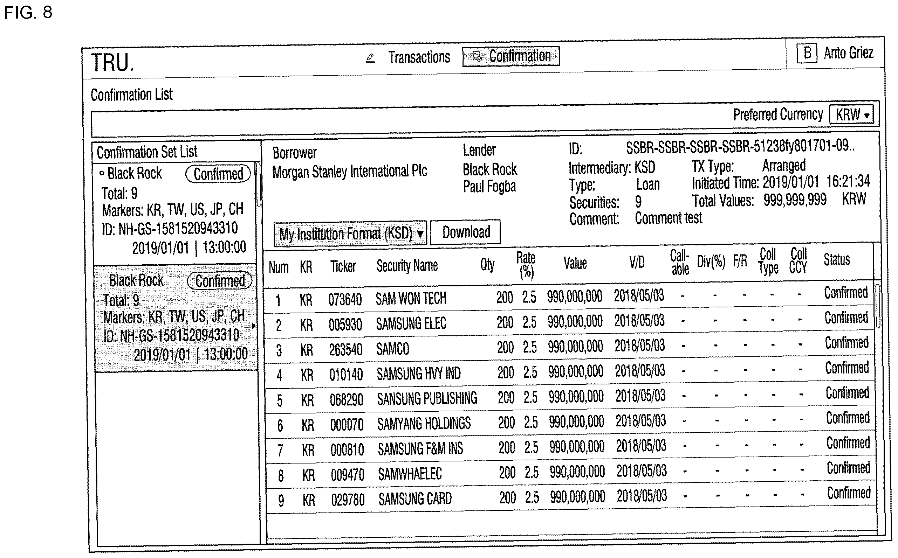

Referring to FIG. 8, a breakdown of the transaction confirmed between the first trader node 110 and the second trader node 120 may be provided on the user interface screen of each of the first trader node 110 and the second trader node 120 in real time or at a predetermined time interval.

The embodiments according to the invention as described above may be implemented in the form of program instructions that can be executed by various computer components, and may be stored on a computer-readable recording medium. The computer-readable recording medium may include program instructions, data files, data structures and the like, separately or in combination. The program instructions stored on the computer-readable recording medium may be specially designed and configured for the present invention, or may also be known and available to those skilled in the computer software field. Examples of the computer-readable recording medium include the following: magnetic media such as hard disks, floppy disks and magnetic tapes; optical media such as compact disk-read only memory (CD-ROM) and digital versatile disks (DVDs); magneto-optical media such as floptical disks; and hardware devices such as read-only memory (ROM), random access memory (RAM) and flash memory, which are specially configured to store and execute program instructions. Examples of the program instructions include not only machine language codes created by a compiler or the like, but also high-level language codes that can be executed by a computer using an interpreter or the like. The above hardware devices may be configured to operate as one or more software modules to perform the processes of the present invention, and vice versa.

Although the present invention has been described above in terms of specific items such as detailed elements as well as the limited embodiments and the drawings, they are only provided to help more general understanding of the invention, and the present invention is not limited to the above embodiments. It will be appreciated by those skilled in the art to which the present invention pertains that various modifications and changes may be made from the above description.

Therefore, the spirit of the present invention shall not be limited to the above-described embodiments, and the entire scope of the appended claims and their equivalents will fall within the scope and spirit of the invention.

## Claims

1. A method for assisting an asset transaction, the method comprising the steps of:
providing offer information from at least one trader node to a first trader node; and
confirming, on the basis of offer information for acceptance which is determined with reference to a first transaction condition of the first trader node among the offer information, a transaction between the first trader node and the second trader node that has provided the offer information for acceptance.

2. The method of Claim 1, wherein when an asset transaction initiation based on the first transaction condition is requested from the first trader node, the offer information is provided from the at least one trader node to the first trader node.

3. The method of Claim 1, wherein the offer information is selectively provided to a trader node matched with a second transaction condition of the at least one trader node.

4. The method of Claim 1, wherein the offer information is automatically provided when a trader node matched with a second transaction condition of the at least one trader node is specified.

5. The method of Claim 1, wherein in the providing step, the offer information is determined with reference to a lendable or borrowable asset of the at least one trader node, and an asset to lend or borrow specified in the first transaction condition.

6. The method of Claim 1, wherein in the providing step, the offer information is determined with reference to a condition related to at least one of a preference level, commission rate, quantity, date, asset type, amount, type and amount of collateral necessary for the transaction, recall possibility, and rights relationship determined by the at least one trader node.

7. The method of Claim 1, wherein in the providing step, the offer information is provided with reference to at least one of a priority and a weight determined by the at least one trader node.

8. The method of Claim 1, wherein in the providing step, the offer information is provided with reference to an order in which transaction initiation information based on the first transaction condition is provided from the first trader node to the at least one trader node.

9. The method of Claim 1, wherein in the providing step, the offer information is provided to a trader node that has provided transaction initiation information maximizing profits of the at least one trader node, among transaction initiation information based on the first transaction condition provided from the first trader node.

10. The method of Claim 1, wherein in the confirming step, acceptance information is provided to the second trader node that has provided the offer information for acceptance.

11. The method of Claim 10, wherein in the confirming step, acceptance confirmation information corresponding to the acceptance information is provided to the first trader node.

12. The method of Claim 11, wherein in the confirming step, whether to confirm the transaction is determined with reference to at least one of a time at which the offer information is provided from the at least one trader node, a time at which the offer information for acceptance is determined, a time at which the acceptance information is provided, and a time at which the acceptance confirmation information is provided.

13. The method of Claim 1, wherein in the confirming step, the offer information for acceptance is determined with reference to an asset to lend or borrow specified in the first transaction condition, and a lendable or borrowable asset specified in the offer information.

14. The method of Claim 1, wherein in the confirming step, the offer information for acceptance is determined with reference to a condition related to at least one of a preference level, commission rate, quantity, date, asset type, amount, type and amount of collateral necessary for the transaction, recall possibility, and rights relationship determined by the first transaction condition.

15. The method of Claim 1, wherein in the confirming step, a score for the offer information provided from the at least one trader node is calculated with reference to a weight determined by the first trader node, and the offer information for acceptance is determined on the basis of the score.

16. The method of Claim 1, wherein in the confirming step, the offer information for acceptance is determined with reference to an order in which the offer information is provided from the at least one trader node to the first trader node.

17. The method of Claim 1, wherein in the confirming step, the offer information for acceptance is determined with reference to a priority assigned to the at least one trader node.

18. The method of Claim 1, wherein in the confirming step, the offer information maximizing profits of the first trader node, among the offer information provided from the at least one trader node, is determined as the offer information for acceptance.

19. The method of Claim 10, wherein in the confirming step, the transaction is confirmed with a trader node that has provided the acceptance information maximizing profits of the second trader node, among the acceptance information provided to the second trader node.

20. The method of Claim 10, wherein in the confirming step, the transaction is confirmed with reference to an order in which the acceptance information is provided to the second trader node.

21. The method of Claim 1, wherein in the confirming step, an asset associated with the offer information for acceptance of the second trader node is held.

22. The method of Claim 1, wherein a fill or kill (FOK) condition for a previously held asset of the second trader node is requested to a third trader node associated with the previously held asset.

23. The method of Claim 1, wherein when a quantity specified by the offer information for acceptance is less than a quantity specified by the first transaction condition, an asset transaction initiation based on a third transaction condition determined on the basis of a difference between the quantities is requested again.

24. The method of Claim 1, further comprising the step of:
verifying validity of the transaction between the first trader node and the second trader node with reference to information on communication between the first trader node and the second trader node.

25. A non-transitory computer-readable recording medium having stored thereon a computer program for executing the method of Claim 1.

26. A system for assisting an asset transaction, the system comprising:
an offer information management unit configured to provide offer information from at least one trader node to a first trader node; and
a transaction confirmation management unit configured to confirm, on the basis of offer information for acceptance which is determined with reference to a first transaction condition of the first trader node among the offer information, a transaction between the first trader node and the second trader node that has provided the offer information for acceptance.

27. The system of Claim 26, wherein when an asset transaction initiation based on the first transaction condition is requested from the first trader node, the offer information is provided from the at least one trader node to the first trader node.

28. The system of Claim 26, wherein the offer information is selectively provided to a trader node matched with a second transaction condition of the at least one trader node.

29. The system of Claim 26, wherein the offer information is automatically provided when a trader node matched with a second transaction condition of the at least one trader node is specified.

30. The system of Claim 26, wherein the offer information management unit is configured to determine the offer information with reference to a lendable or borrowable asset of the at least one trader node, and an asset to lend or borrow specified in the first transaction condition.

31. The system of Claim 26, wherein the offer information management unit is configured to determine the offer information with reference to a condition related to at least one of a preference level, commission rate, quantity, date, asset type, amount, type and amount of collateral necessary for the transaction, recall possibility, and rights relationship determined by the at least one trader node.

32. The system of Claim 26, wherein the offer information management unit is configured to provide the offer information with reference to at least one of a priority and a weight determined by the at least one trader node.

33. The system of Claim 26, wherein the offer information management unit is configured to provide the offer information with reference to an order in which transaction initiation information based on the first transaction condition is provided from the first trader node to the at least one trader node.

34. The system of Claim 26, wherein the offer information management unit is configured to provide the offer information to a trader node that has provided transaction initiation information maximizing profits of the at least one trader node, among transaction initiation information based on the first transaction condition provided from the first trader node.

35. The system of Claim 26, wherein the transaction confirmation management unit is configured to provide acceptance information to the second trader node that has provided the offer information for acceptance.

36. The system of Claim 35, wherein the transaction confirmation management unit is configured to provide acceptance confirmation information corresponding to the acceptance information to the first trader node.

37. The system of Claim 36, wherein the transaction confirmation management unit is configured to determine whether to confirm the transaction with reference to at least one of a time at which the offer information is provided from the at least one trader node, a time at which the offer information for acceptance is determined, a time at which the acceptance information is provided, and a time at which the acceptance confirmation information is provided.

38. The system of Claim 26, wherein the transaction confirmation management unit is configured to determine the offer information for acceptance with reference to an asset to lend or borrow specified in the first transaction condition, and a lendable or borrowable asset specified in the offer information.

39. The system of Claim 26, wherein the transaction confirmation management unit is configured to determine the offer information for acceptance with reference to a condition related to at least one of a preference level, commission rate, quantity, date, asset type, amount, type and amount of collateral necessary for the transaction, recall possibility, and rights relationship determined by the first transaction condition.

40. The system of Claim 26, wherein the transaction confirmation management unit is configured to calculate a score for the offer information provided from the at least one trader node with reference to a weight determined by the first trader node, and to determine the offer information for acceptance on the basis of the score.

41. The system of Claim 26, wherein the transaction confirmation management unit is configured to determine the offer information for acceptance with reference to an order in which the offer information is provided from the at least one trader node to the first trader node.

42. The system of Claim 26, wherein the transaction confirmation management unit is configured to determine the offer information for acceptance with reference to a priority assigned to the at least one trader node.

43. The system of Claim 26, wherein the transaction confirmation management unit is configured to determine the offer information maximizing profits of the first trader node, among the offer information provided from the at least one trader node, as the offer information for acceptance.

44. The system of Claim 35, wherein the transaction confirmation management unit is configured to confirm the transaction with a trader node that has provided the acceptance information maximizing profits of the second trader node, among the acceptance information provided to the second trader node.

45. The system of Claim 35, wherein the transaction confirmation management unit is configured to confirm the transaction with reference to an order in which the acceptance information is provided to the second trader node.

46. The system of Claim 26, wherein the transaction confirmation management unit is configured to hold an asset associated with the offer information for acceptance of the second trader node.

47. The system of Claim 26, wherein the transaction confirmation management unit is configured to request a fill or kill (FOK) condition for a previously held asset of the second trader node to a third trader node associated with the previously held asset.

48. The system of Claim 26, wherein when a quantity specified by the offer information for acceptance is less than a quantity specified by the first transaction condition, an asset transaction initiation based on a third transaction condition determined on the basis of a difference between the quantities is requested again.

49. The system of Claim 26, further comprising:
a validity management unit configured to verify validity of the transaction between the first trader node and the second trader node with reference to information on communication between the first trader node and the second trader node.
